# EUROPEAN PATENT APPLICATION

(11) **EP 1 351 027 A1**
(43) Date of publication of application: **08.10.2003**
(21) Application number: 01983862.2
(22) Date of filing: 01.11.2001
(51) Int. Cl.: F24J 2/10

(54) **DEVICE FOR CAPTURING AND EMITTING RADIATIONS**

(30) Priority: 11.01.2001 MX 0100376
(71) Applicant: Arcos Gomar, Benjamin Fernando, Atizapan de Zaragoza Edo., Mexico 58942 (MX); Arcos Castro, Tupac, Atizapande Zaragoza Edo., Mexico 58942 (MX)
(72) Inventor: Arcos Gomar, Benjamin Fernando, Atizapan de Zaragoza Edo., Mexico 58942 (MX); Arcos Castro, Tupac, Atizapande Zaragoza Edo., Mexico 58942 (MX)
(74) Representative: Elzaburu Marquez, Alberto
(86) International application number: PCT/MX01/00084
(87) International publication number: WO 02/055943

(57) **Abstract**

The disclosure is a radiation collecting/emitting device to/from different spatial directions, the apparatus in the preferred design is manufactured in a single piece and the work surface is modified to obtain a reflective surface for the radiations of interest. In an alternate design, the device is covered by an envelope or bell to increase the effectiveness of the device and protect it from the surrounding environment. The device can be used in a wide variety of applications, such as solar energy collection for industrial or commercial purposes, diverse electromagnetic radiations antennae or radar, since its area of action is 360° related to the horizontal and 180° related to the vertical.

## Description

### Antecedents and field of invention.

This invention is related to sunlight collection apparatuses, specifically, the apparatus is a device that has been designed and set up to be able to collect and emit different types of radiations.

The use of energy sources other than hydrocarbons has been a concern for many researchers; among these sources are aeolic, geothermal, solar, etc. Within the field of use of solar energy, a number of inventions have been developed intended to collect and take advantage of the widespread source of energy represented by solar energy.

Among the most common devices are those that absorb solar energy through solar cells that transform this energy into electrical power, which is then transformed according to the intended use.

It is also known that there are devices for the use of solar energy that concentrate it to heat a given object, such as water or some container, for its later use.

An important disadvantage of these two types of systems is the fact that its efficiency depends greatly upon the orientation of the collection devices, which, for its optimum use, must be oriented in relation to the sun, in such a way to collect the most brightness or radiation, which implies that these devices must have motors or some other means to achieve flexibility in orientation, according to the hour of the day and the season of the year.

The radio wave, television, etc. collection devices are usually semispherical devices, specifically parabolas or common antennae, which pick-up a certain amount of radiations and concentrate them in a focal point, there they are collected by a collecting element for its later use.

Devices such as radars operate under a similar principle, where radiations are emitted towards one or several points in space, either within or outside the earth's atmosphere.

Frequently, both collection and emission devices described above, use motors or devices to pick-up or emit radiations of interest in an optimum form.

United States of America Patent No. 4,602,613 describes a solar energy collection device made up of two collectors, one primary, stationary and fixed, cylindrically arched, and a mobile secondary collector, which is a flat plaque that moves in horizontal direction.

United States of America Patents Nos. 4,230,095; 4,359,265; 4,387,961 and 5,289,356 of Winston, offer a number of devices, but all of them are based on a concentrator based on a single optically parabolic system, as a primary solar energy concentrator.

United States of America Patent No. 5,564,410 describes an improved concentration system for solar energy, in which two fixed reflecting elements are placed one in front of the other, and with a common mobile collecting element with the purpose of following the focus of both reflecting elements, these elements are concave and are oriented in a fixed horizontal way.

Construction, even if it is relatively simple, implies reflective elements and the concentrator, in addition to a microprocessor-based system to move this collector.

Thus, it would be desirable to have a device which could emit or collect radiations without the need of motors or orientation devices that search for the concentration focus of energy, in case of collectors, or that spin while emitting radiations, in case of radiation emission devices.

This invention provides a simple set up device, which solves the problems in technique's state by providing a device that does not require modifications in it position to collect or emit radiations in an optimum way.

### Purposes of the invention

This invention has the main purpose of providing a device to pick-up or collect energy in the form of radiations; the device is fixed regarding a surface and which collection efficiency is the same, regardless of the energy source position; the sun, for example.

Another purpose of this invention is to provide a device to collect radiations that come from radiation sources other than the sun, man-made or not.

Furthermore, another purpose of this invention is to provide a device to emit radiations at the same time with a maximum efficiency, towards different directions in space.

In this description the terms collector and pick-up are used indistinctly to designate the element used to reflect and concentrate radiations in a determined point or zone.

### Brief description of figures

Figure 1 represents the segment of circle or parabola (generatrix) that originates the work surface of the collection/emission device of this invention.
Figure 2 shows the segment of figure 1 revolving 360° around z-axis.
Figure 3 is a top plan view that shows the body theoretically obtained from figure 2, representing with a the impinging radiations on the reflective surface.
Figure 4 is a side plan view of the collector/emitter of this invention.
Figure 4A-4D are designs of the collector/emitter of this invention.
Figure 4E is a cross sectional view of the collector/emitter of the preferred design, where it is shown that the figure 1 segment is a representation of the main work surface C.
Figures 5-5B show pile-ups and/or spatial arrays that may have several functions or reinforce one function.
Figure 6 is a schematic representation of the shadow produced in the event of a solar radiation at 9:00 A.M. and a bell or envelope.
Figure 6A is a schematic representation of the shadow produced in the event of a solar radiation at 11:00 A.M. with the same configuration of bell or envelope in figure 6.

### Descriptions of the preferred designs

The following is a detailed description of this invention, using the figures described above and a preferred design of the collector/emitter device subject of this invention, used as a solar energy collector, with the only purpose of a better understanding of the invention.

It must be understood that the device in this invention can be used both to collect solar energy and radio waves and any kind of radiations, by performing the necessary modifications to the work surface and the auxiliary devices which will collect those radiations. Similarly, the apparatus in this invention can be equally adapted, through modifications in the work surface, to emit radiations of different nature, by performing changes in the devices attached to same.

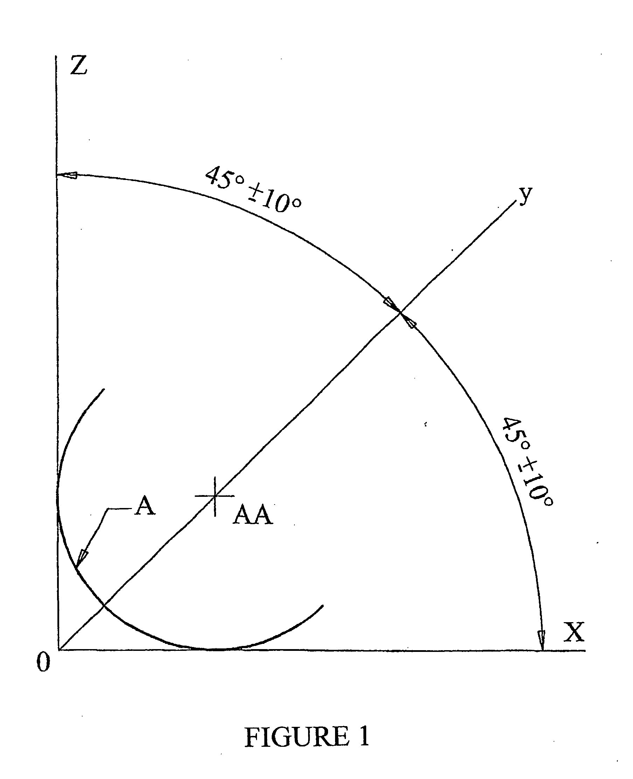

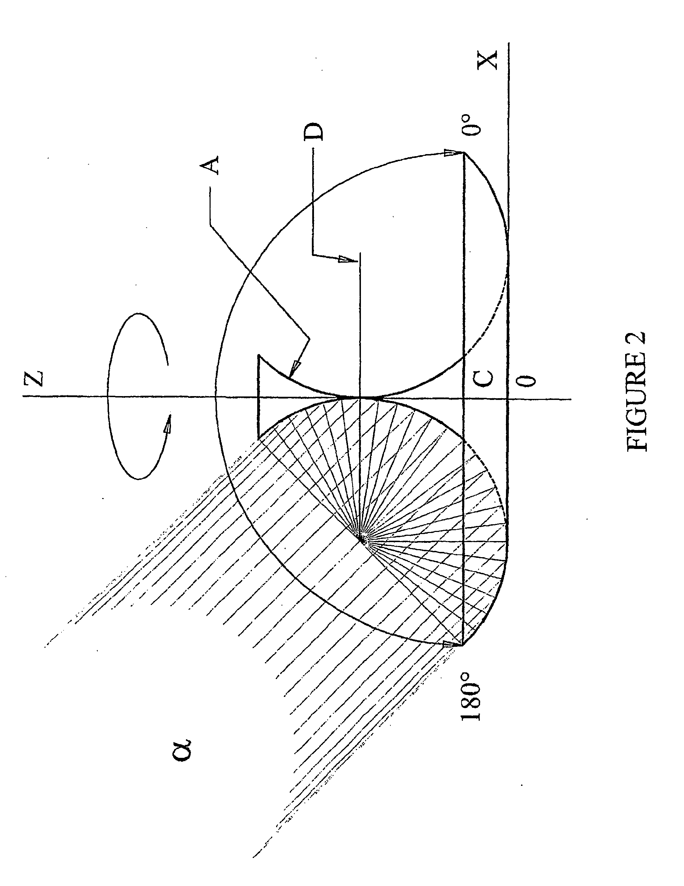

Generatrix **A** is represented in figure 1, iwhich by means of being revolved 360° around its z-axis, generally produces a body such as shown in figure 2; notice that this parabola is inclined approximately 45° ± 10°, with **o** as origin and **AA** as bearing for the drawing of generatrix **A**.

The theoretical body obtained as indicated above is shown in figure 2, that is, revolving generatrix **A** around the z-axis, where the collection or emission process of solar energy **a** is schematically represented (or any other kind, according to the use designated for the reflective surface C). It can be seen that radiations **a** are collected by surface **C**, reflected and concentrated in a zone or focal line **D**.

The term focal zone, as used here, represents a series of focal points which are placed side by side uninterruptedly, as it is deducted from figures 2, 3 or 4, among others.

This means that the work performed by the device of this innovation is equivalent to the ideal array offered by a series of parabola antennae, which focal points are interconnected uninterruptedly among them.

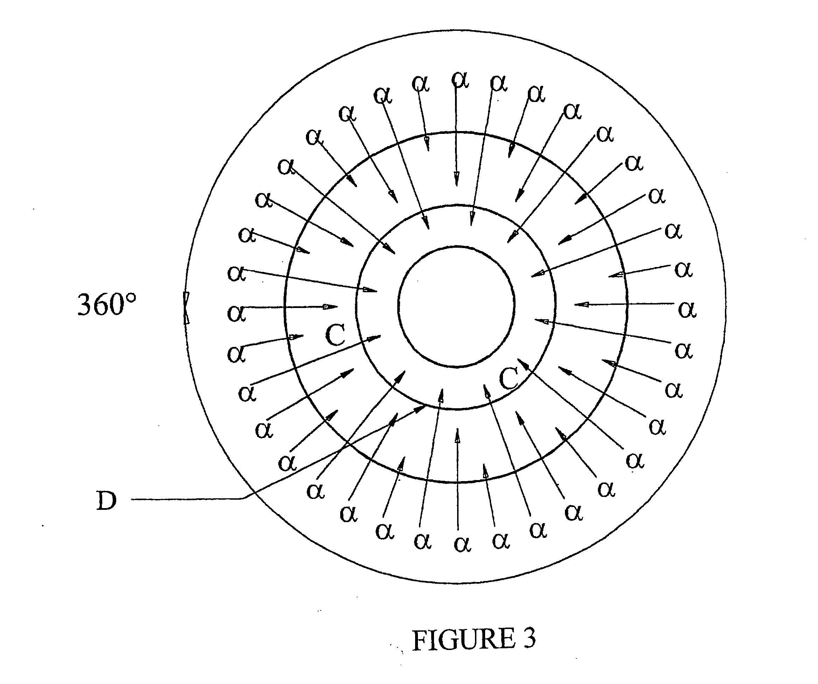

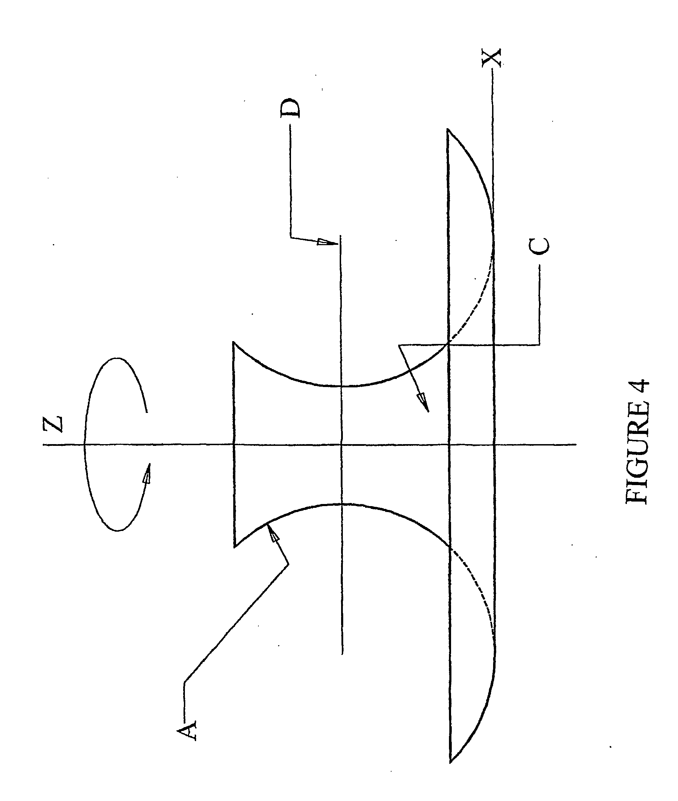

The device under this invention is characterized by fact that the working surface has an action area of 360° from the horizontal; and as it is shown on figure 2 and 3, the action area is 180° from the vertical, without the need of any movement of its constituent parts.

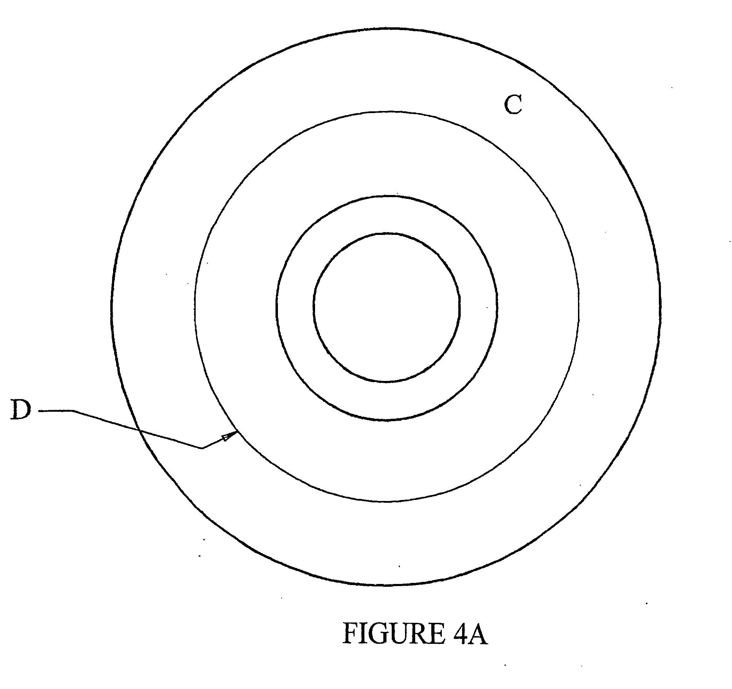

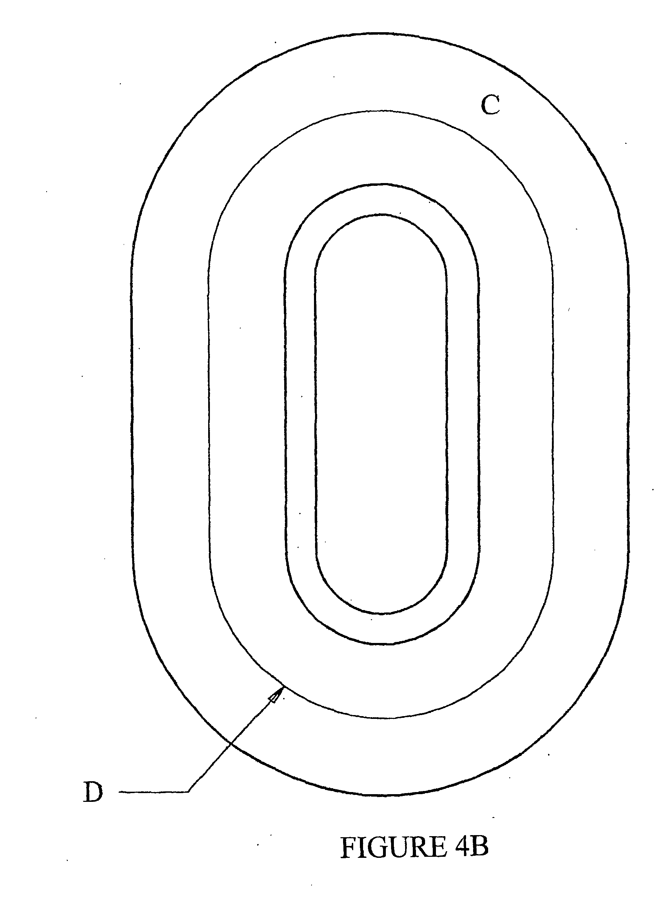

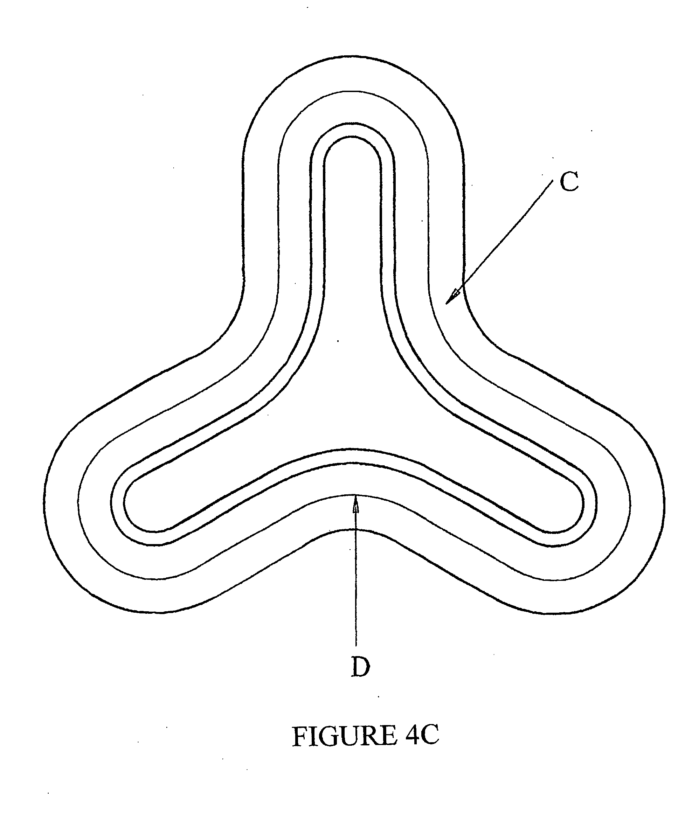

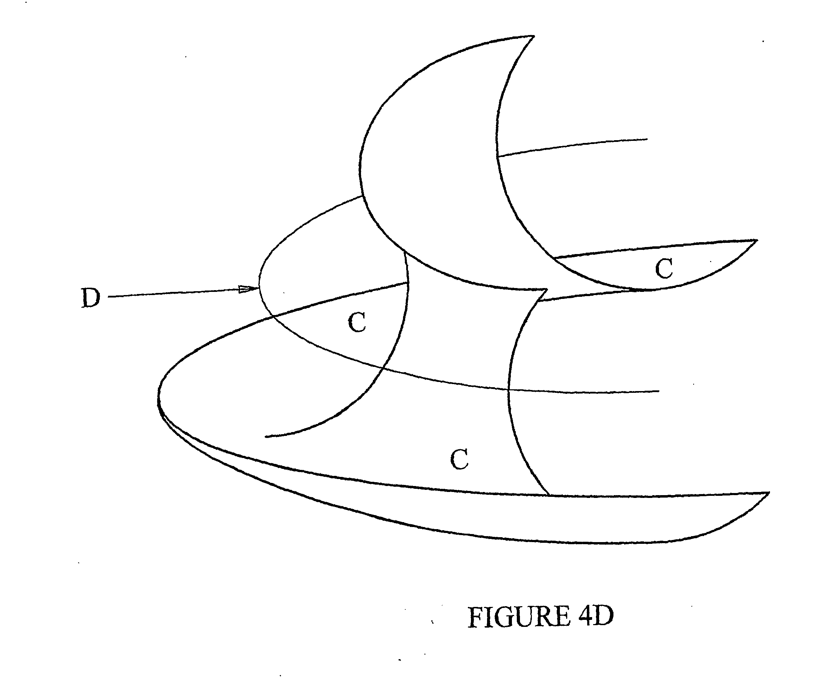

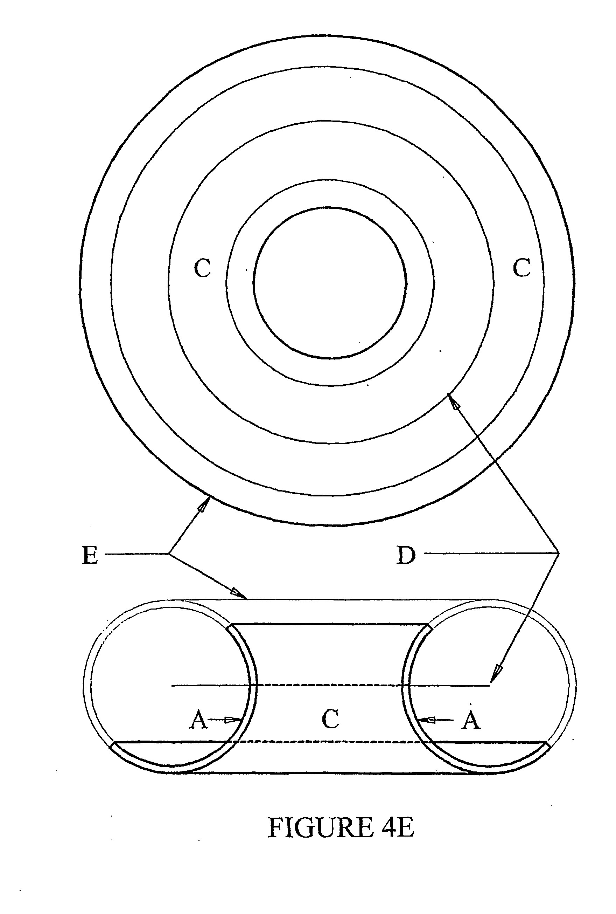

As it can be seen on figure 4, the collector/emitter of this invention is obtained by moving the generatrix **A** positively on x-axis, and then revolving it 360° from z-axis.

This body can be built of almost any kind of material, as long as it complies with the requirements of stability and strength, according to the use it will be given. For example, it can be built of aluminum and/or some other plastic material, stabilized or not against the effects of light, heath or oxygen; it can be built of wood, or some other ferric or non-ferric metal, as long as its work surface **C**, provides the characteristics of emission or reception, or both, as required.

It will be obvious to those people with an intermediate knowledge of the subject, that the role the main work surface plays is fundamental, while the construction of the device itself is only important as an economical and mechanical matter.

The materials useful for the construction of the reflective surface include polished, looking-glass grade metals, or materials lapped either by deposit or lamination.

In a preferred design, the work surface is composed of a reflective aluminum surface covered either by a polymer material stabilized against ultraviolet light or With some other chemical or electrochemical treatment that allows it to keep its reflective properties regardless the surrounding environment.

As demonstrated by figures 4B to 4D, the device's profile can be extruded regarding one or more Cartesian axis, depending on the use intended for the device; for example, it could be placed on top of a bus, adopting the form- in 4B, or on top of a building with a configuration similar to the one on figure 4C, or be moved along the vertical, or related to two or three axis, x, y, z, as on figure 4D.

Figure 4E shows a design of the apparatus in this invention, where an envelope **E** or bell can be seen, which is used for several purposes. One of them is to use it as filter for certain kind of radiations, avoiding the ultraviolet rays, for example, from touching the reflective surface, or allowing only one wavelength to pass through Another use is to isolate the collector/emitter device from the environmental conditions.

The bell is made of a totally transparent materials or a material which exterior surface is transparent to the radiations that will be worked with, but its inner surface is reflective to those same radiations. Obviously, this construction depends upon the use intended for the collector/emitter. As explained below, the fundamental purpose of this envelope is to increase the efficiency of the collector/emitter device.

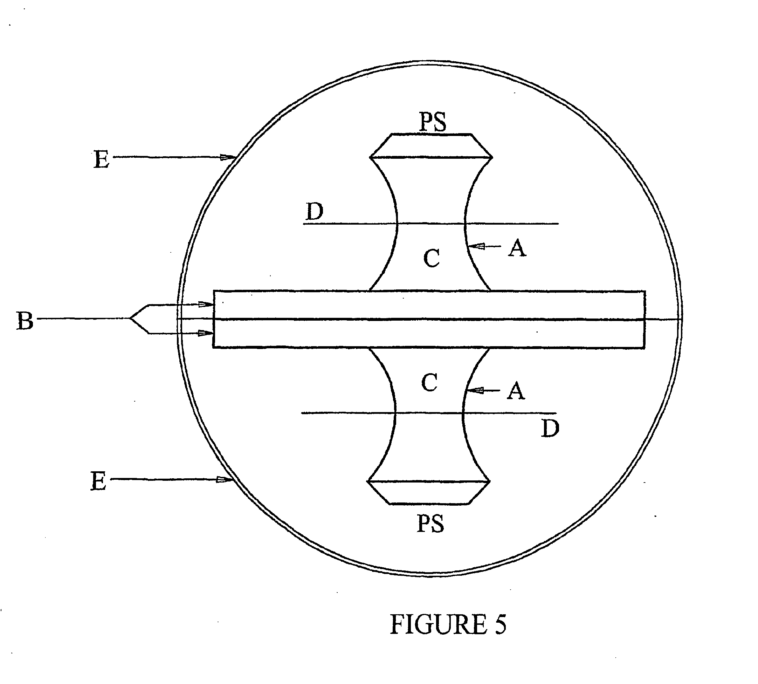

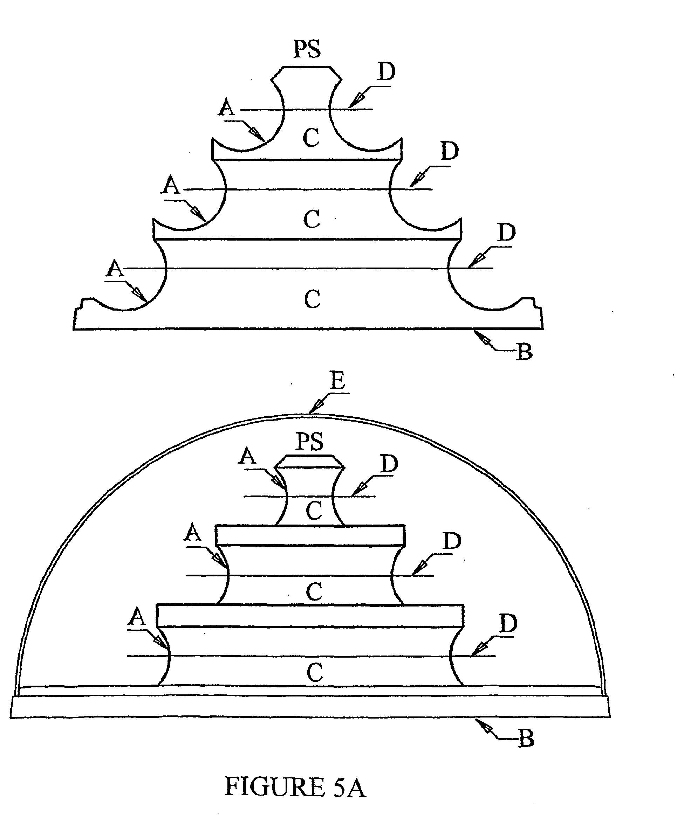

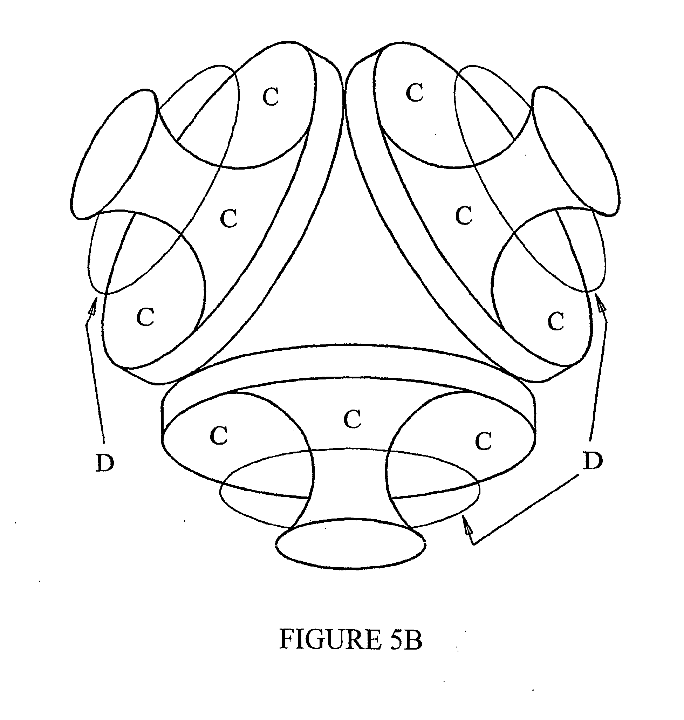

Similarly, the device on figure 4 can be assembled to form an apparatus that contains two or more of them, and perform adaptations among them to obtain the spatial dispositions shown on figures 5-5B. In all of them we find the common characteristic of the profile generated by the revolution of generatrix **A**, except that the revolution is made in more than one direction or Cartesian axis

It will be evident for a person with intermediate knowledge of this subject that the different configurations will be useful in different applications, and that different configurations can be inferred from the reading of this invention, without they being apart from the essence of same.

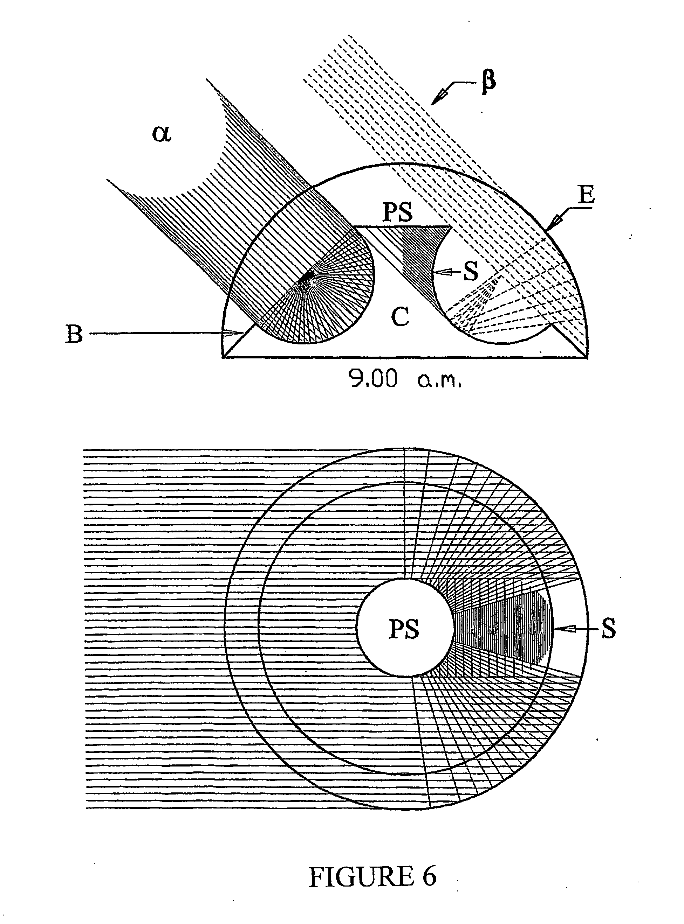

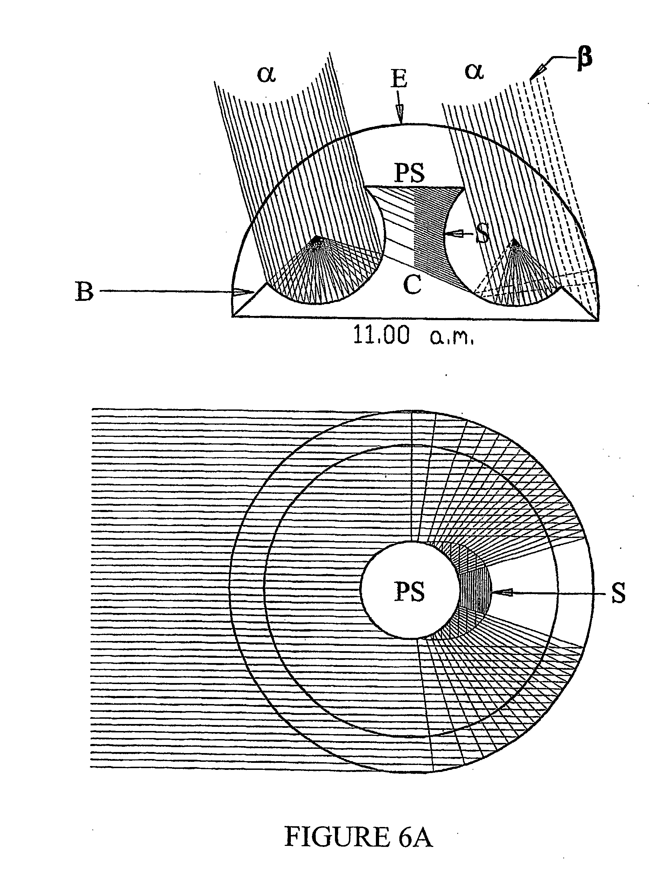

On figure 6, lines ∃ that represent radiations and that do not impinge directly on the reflective surface, **C**, different from a, are collected by the bell or envelope **E**, which due to its configuration tends to concentrate them in one focal point, crashing with surface **C**, producing a feedback and reducing the shadow **S** produced by the collector/emitter device, thus increasing importantly the radiation collection effectiveness.

Figure 6A shows a variant of the work performed by bell **E**, at a different time of the day.

Some of the applications that the collector/emitter device of this invention may have are the collection and concentration of solar energy, with the purpose of heating up several fluids at industrial and domestic level, in order to, for example, provide heat or electricity within an enclosure by adapting the adequate components already in use in industry; general lighting through the use of fiberoptics; pick-up or broadcast of radio or television waves, within and outside the earth's atmosphere, collection or emission of electromagnetic waves within and outside the earth's atmosphere as a mean of collecting solar energy and send it to elements that transform it into electrical power to drive vehicles, motors, etc.

An important feature to observe in this invention is the inclination of the generatrix in regards to the vertical or horizontal axis, which is 45° ± 10° and which purpose is to present the largest surface facing the radiation source.

As can be seen in the attached figures, the device also contains a base **B** and a top piece **PS** that are used both to settle the device on a surface and to attach it to another device, besides, the accessories of this device can be introduced or removed through these elements, for example, piping or wires to conduct fluids or energy. The bell **E** can be similarly attached to the top piece **PS** or to the base **B** by means of any suitable items, such as screws, bolts, glue, staples, locks, etc. The building material of the base and the top piece can either be the same or different from the one of work surface **C**. Similarly, the device's body can be hollow or solid, depending on the use and building materials.

## Claims

1. A radiation collector/emitter device which work surface has a concave semicircular configuration and presents a body, a base and a top piece, the latter are parallel among them, and the reason why the work surface is formed revolving a semicircular generatrix in relation to a Cartesian axis.

2. The device pursuant to claim 1, unique because the work surface is inclined 45° ± 10° in relation to the perpendicular axis around which the generatrix was revolved.

3. The device pursuant to claim 2, unique because the body is integral with the work surface, and the base and top piece.

4. The device pursuant to claim 2, unique because the body, the work surface, and the base and top piece can be integrated in a single element or not.

5. The device pursuant to claim 3 or claim 4, unique because the work surface is made of such material that reflects radiations of a particular wavelength.

6. The device pursuant to claim 5, unique because the device also includes an envelope or bell that is built of a totally transparent material, or a material which outer surface is transparent to radiations of interest but its inner surface is reflective to the same radiations, according to the use intended for the collector/emitter device.

7. The device pursuant to claim 1, unique because the work surface revolves in relation to two or more Cartesian axis, to obtain a body with the spatial configuration required.

8. The device pursuant to claim 1, unique because the work surface has an action area of 360° related to the horizontal, and 180° related to the vertical, without the need of any movement of its constituent parts.

9. The device pursuant to claim 8, unique because two or more collector/emitter devices can be piled and modified pursuant to this pile-up,.
